# EUROPÄISCHE PATENTANMELDUNG

(11) **EP 0 875 363 A2**
(43) Veröffentlichungstag der Anmeldung: **04.11.1998**
(21) Anmeldenummer: 98104099.1
(22) Anmeldetag: 07.03.1998
(51) Int. Cl.: B29D 30/00

(54) **Verfahren zur Herstellung von Reifen**

(30) Priorität: 14.03.1997 DE 19710528
(71) Anmelder: Continental Aktiengesellschaft, 30165 Hannover (DE)
(72) Erfinder: Hausmann, Bernadette, Dr., 30175 Hannover (AT); Peter, Julius, Dr., 1130 Wien (AT); Schano, Rudolf, Dr., 2514 Traiskirchen (AT)

(57) **Zusammenfassung**

Verfahren zur Herstellung eines Reifens, insbesondere eines Fahrzeugluftreifens, welcher aus einzelnen Reifenbauteilen - wie beispielsweise einer Innenplatte, zumindest einer Karkassenlage, Wulstkernen und Kernprofilen, Seitenwänden, einem Gürtelverband und einem Laufstreifen - aufgebaut ist, die im unvulkanisierten Zustand aus Aktivruß und/oder aktiven hellen Füllstoff enthaltenden Kautschukmischung bestehen oder solche Kautschukmischungen enthalten. Die Kautschukmischung(en), gegebenenfalls bereits die ihnen zugrundeliegenden Grundmischungen, zumindest eines dieser Reifenbauteile wird bzw. werden vor der Vulkanisation letzterer einer Entgasung unterzogen. Der Reifen oder Teile des Reifens werden in einem entgasten Zustand vulkanisiert.

## Beschreibung

Die vorliegende Erfindung betrifft ein Verfahren zur Herstellung eines Reifens, insbesondere eines Fahrzeugluftreifens, welcher aus einzelnen Reifenbauteilen - wie beispielsweise einer Innenplatte, zumindest einer Karkassenlage, Hornprofilen, Wulstkernen und Kernprofilen, Seitenwänden, einem Gürtelverband und einem Laufstreifen - aufgebaut ist, die im unvulkanisierten Zustand aus Aktivruß und/oder aktiven hellen Füllstoff enthaltenden Kautschukmischungen bestehen oder solche Kautschukmischungen enthalten. Die Erfindung betrifft ferner einen nach dem Verfahren hergestellten Reifen.

Luftreifen für verschiedenste Anwendungen, z.B. für Fahrräder, Motorräder, Personenkraftwagen, Lastkraftwagen, Traktoren u.s.w. werden im allgemeinen durch einen schichtweisen Aufbau von aus Kautschukmischungen hergestellten Platten oder Profilen und von in Kautschukmischungen eingebetteten Festigkeitsträgern, wie Corden, Geweben etc. hergestellt. Die Montierbarkeit auf Felgen wird im allgemeinen durch Wulstkerne sichergestellt.

Reifen werden im allgemeinen derart aufgebaut, daß auf eine zylindrische Aufbautrommel die Innenplatte und eine Karkassenlage aufgebracht werden, anschließend die Wulstkerne mit Kernprofilen gesetzt werden und nach dem Hochschlagvorgang, bei dem die Karkassenlagenenden um die Wulstkerne gefaltet werden, gegebenenfalls eine weitere Karkassenlage, die Seitenwandteile und die Hornprofile angebracht werden. Die derart fertiggestellte Reifenkarkasse wird zu einer zweiten Aufbautrommel transferiert, wo der auf einer gesonderten Gürteltrommel aufgebaute Gürtel/Laufstreifenverband aufgebracht wird. Alternativ dazu kann die Karkassenherstellung und die Fertigstellung des Rohreifens auf einer einzigen Trommel erfolgen. Nach dem schichtweisen Aufbau, der Konfektion des Rohreifens, wird der Reifen in einer Vulkanisationsform ausvulkanisiert, wodurch die Quervernetzung der Kautschukmoleküle durch Erhitzen auf Temperaturen zwischen 130° und 220° C über einen Zeitraum von einigen Minuten bis zu einigen Stunden erfolgt. Dabei erhält der Reifen seine endgültige Gestalt mit eingeformtem Laufstreifenprofil und beschrifteten bzw. dekorativ gestalteten Seitenwänden.

Insbesondere durch die in den Schulterbereichen vorliegenden relativ großen Materialstärken sind infolge der schlechten Wärmeleitfähigkeit von Gummi lange Vulkanisationszeiten erforderlich, wobei eine Übervulkanisation in den Schulterbereichen unvermeidlich ist, was vor allem bei Reifen, deren Laufflächenmischungen Naturkautschuk beinhalten, Verschlechterungen von Eigenschaften, beispielsweise eine zu hohe Wärmeentwicklung im Betrieb oder einen höheren Rollwiderstand, bewirken kann.

Die langen Vulkanisationszeiten bedingen neben einem hohen Energieverbrauch auch hohe Formkosten, vor allem bei Radialreifen, wo im allgemeinen radial geteilte Formen verwendet werden, die hohe Herstellkosten haben. Die langen Vulkanisationszeiten führen auch zu unterschiedlichen Vulkanisationszuständen in den verschiedenen Schichtzonen eines Reifens, was wiederum Eigenschaftsverschlechterungen verursachen kann.

Diese Nachteile können weitgehend durch ein Verfahren zur Herstellung eines Reifens vermieden werden, bei dem der Reifen in zwei voneinander getrennten Verfahrensteilen hergestellt wird, wobei im ersten Verfahrensteil beispielsweise die Reifenkarkasse ohne Laufstreifen aufgebaut und vulkanisiert wird, und im zweiten Verfahrensteil der Laufstreifen haftfest aufvulkanisiert wird. Dieses Herstellverfahren ist aus der Deutschen Patentanmeldung 195 07 486 bekannt.

Bei diesem bekannten Verfahren kann zwar die Vulkanisationsbelastung in den Schulterbereichen des Reifens geringer gehalten werden, aber in Summe sind die Vulkanisationszeiten länger als bei der Vulkanisation eines nach dem konventionellen Aufbauverfahren hergestellten Reifens.

Die Erfindung hat sich nun die Aufgabe gestellt, eine Lösung für die aufgezeigten Probleme aufzufinden und ein Verfahren zur Herstellung von Reifen vorzuschlagen, bei dem die Vulkanisationsbelastung, vor allem in den Schulterbereichen eines Reifens, verringert werden kann und bei dem auch die Vulkanisationszeiten gegenüber herkömmlichen Verfahren reduziert werden können.

Gelöst wird die gestellte Aufgabe erfindungsgemäß dadurch, daß die Kautschukmischung(en), gegebenenfalls bereits die ihnen zugrundeliegenden Grundmischungen, zumindest eines dieser Reifenbauteile vor der Vulkanisation letzterer einer Entgasung unterzogen wird bzw. werden, und daß der Reifen oder Teile davon in einem entgasten Zustand vulkanisiert wird bzw. werden.

Bei erfindungsgemäß hergestellten Reifen können die Vulkanisationszeit und damit die Vulkanisationsbelastung merkbar reduziert werden, wenn Reifenaufbauteile, die aus Kautschukmischungen aufgebaut sind, vor ihrem Aufbringen entgast werden. Als weiterer Vorteil ist vor allem die erzielbare Qualitätsverbesserung, etwa durch bessere Lagenverschweißung und Verhinderung von Lufteinschlüssen, zu nennen.

Eine merkliche Reduktion der Vulkanisationszeit und der Vulkanisationsbelastung ist dadurch erreichbar, daß zumindest einer der die Dauer der Vulkanisationszeit bestimmenden Reifenbauteile, insbesondere der Laufstreifen, zumindest ein Teil des Laufstreifens oder die Kernprofile, aus einer entgasten Kautschukmischung hergestellt wird.

Von besonderem Vorteil ist das erfindungsgemäße Verfahren zur Herstellung von runderneuerten Reifen, bei denen der aus einer unvulkanisierten Kautschukmischung bestehende Laufstreifen auf Reifenkarkassen, deren abgefahrener Laufstreifen vorher maschinell entfernt wurde, aufgebracht wird und der Reifen anschließend vulkanisiert wird. Hier lassen sich sehr deutliche Energieeinsparungen dadurch erzielen, daß der Laufstreifen aus einer entgasten Kautschukmischung hergestellt wird.

Besonders vorteilhaft ist das erfindungsgemäße Verfahren auch bei der Herstellung von Neureifen, deren Herstellungsverfahren in zwei voneinander getrennte Verfahrensteile geteilt ist. Dabei wird im ersten Verfahrensteil ein Teilreifen, welcher als radial äußerste Lage wenigstens eine Karkassenlage und höchstens einen Teil des Laufstreifens aufweisend aufgebaut wird und anschließend vulkanisiert wird, hergestellt, im zweiten Verfahrensteil wird der Teilreifen zu einem Komplettreifen aufgebaut, welcher ebenfalls einem Vulkanisationsvorgang unterzogen wird. Von den im zweiten Verfahrensteil aufgebrachten und aus Kautschukmischungen bestehenden Bauteilen wird zumindest der Laufstreifen bzw. zumindest ein Laufstreifenteil aus einer entgasten Kautschukmischung erstellt. Auch hier sind die erzielbare Reduktion der Vulkanisationszeit und damit die Energieersparnis signifikant.

Um weitgehend auszuschließen, daß die nicht vulkanisierten, entgasten Kautschukmischungen wieder Luft- oder Wasserdampf aufnehmen können, wird nach einem weiteren Merkmal der Erfindung der fertig aufgebaute Reifen unmittelbar nach seinem Aufbau vulkanisiert.

Es gibt eine Anzahl von Möglichkeiten, Kautschukmischungen im Rahmen des erfindungsgemäßen Verfahrens zu entgasen, wobei diese Möglichkeiten in einer Reihe von Unteransprüchen enthalten sind.

So ist es beispielsweise möglich, zur Herstellung der entgasten Fertigmischung die Grundmischung zu entgasen, oder es wird die Fertigmischung entgast oder es wird die Grundmischung fertig gemischt und dabei gleichzeitig entgast.

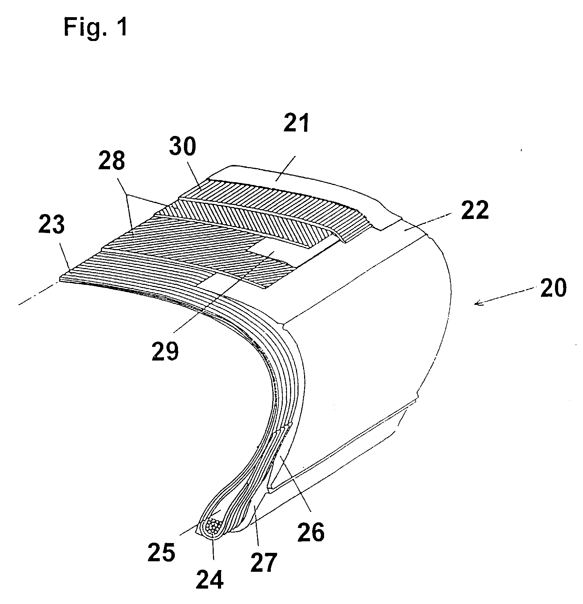

Weitere Merkmale, Vorteile und Einzelheiten der Erfindung werden nun an Hand der Beschreibung und unter Bezugnahme auf die einzige Zeichnungsfigur (Fig. 1), die eine bevorzugte Ausführungsform der Erfindung betrifft, näher erläutert.

Bei der gegenständlichen Erfindung geht es grundsätzlich darum, Reifenbauteile, die aus Kautschukmischungen bestehen, die aktiven Füllstoff, insbesondere Aktivruß und/oder einen aktiven hellen Füllstoff, beispielsweise Kieselsäure, enthalten, vor dem Reifenaufbau zumindest weitgehend zu entgasen und als solche auf den Reifen aufzubringen. Dabei werden unter aktiven Füllstoffen solche verstanden, deren BET - Fläche mindestens 40 m²/g, insbesondere mindestens 100 m²/g, beträgt.

Es ist bekannt, daß aktiven Füllstoff, insbesondere Aktivruß und/oder hellen Füllstoff, wie beispielsweise Kieselsäure, enthaltende, unvulkanisierte Kautschukmischungen während ihrer Herstellung und Verarbeitung sehr leicht Gase, insbesondere Luft und Wasserdampf aufnehmen können. Das Ausmaß der Gaslöslichkeit in Kautschukmischungen ist von der Mischungstemperatur und dem herrschenden Druck abhängig, wobei die Gaslöslichkeit mit steigendem Druck steigt, mit steigender Temperatur jedoch sinkt.

Im allgemeinen enthalten die Kautschukmischungen für Fahrzeugluftreifen, wie sie etwa für Kernprofile, Seitenwände, Innenplatte und Laufstreifen gefertigt werden, bis zu ca. 100 Gewichtsteile (phr) Ruß ,bezogen auf 100 Gewichtsteile (phr) Kautschuk in der Mischung. Insbesondere bei Mischungen für Laufstreifen für PKW - Reifen ist es auch üblich, zumindest einen Teil des Rußanteiles durch feinverteilte, gefällte Kieselsäure zu ersetzen, was vor allem eine Verminderung des Rollwiderstandes bewirkt.

Insbesondere beim Spritzen von Kautschukmischungen kann es infolge von Gasübersättigung zum Entstehen von Poren, also von Ansammlungen nicht mehr gelöster Luft, kommen. Die Ursachen der Gasübersättigung beim Spritzvorgang sind einerseits die Gasübersättigung infolge Temperaturanstieges und andererseits die Druckentlastung der Kautschukmischung im Mundstück.

Auch die übliche Lagerzeit der aus Kautschukmischungen bestehenden Bauteile eines Reifens, wie beispielsweise Laufstreifen, Seitenwände, Wulstkeile etc. begünstigt die Aufnahme von Wasser und Luft aus der Atmosphäre.

Einer der wesentlichen Nachteile der in den einzelnen Kautschukmischungen der Bauteile eines Reifens gelösten Gase besteht nun darin, daß der fertig aufgebaute Reifen relativ lange vulkanisiert werden muß, um eine porenfreie Vulkanisation des Reifens sicherzustellen. Insbesondere bedingt die Materialstärke im Laufstreifenbereich, vor allem jene in den Reifenschulterbereichen und dem Wulstbereich, infolge der schlechten Wärmeleitfähigkeit von Gummi lange Vulkanisationszeiten, die eine Verschlechterung von Reifeneigenschaften, beispielsweise einen höheren Rollwiderstand, bewirken können.

Die Vulkanisationszeit und damit die Vulkanisationsbelastung eines Reifens lassen sich dadurch verringern, daß der Rohreifen aus Bauteilen aus entgasten Kautschukmischungen aufgebaut wird und darauf geachtet wird, daß während des Handlings des Rohreifens bis zur Vulkanisation möglichst keine Aufnahme von Gasen, insbesondere Luft oder Wasserdampf, in die unvulkanisierten Mischungen erfolgen kann. Der Effekt der Reduzierung der Vulkanisationszeit ist dann am größten, wenn vorrangig die die Dauer der Vulkanisationszeit bestimmenden Reifenbauteile, demnach der Laufstreifen und die Kernprofile, unter Einsatz von entgasten Kautschukmischungen hergestellt werden.

Wie schon erwähnt, hängt die Gaslöslichkeit in Kautschukmischungen vom Umgebungsdruck und der Mischungstemperatur ab. Eine Kautschukmischung kann nun grundsätzlich umso besser bzw. intensiver entgast werden, je höher die Temperatur und je niedriger der Druck ist. Darüber hinaus spielt auch die Zeit, die dem Entweichen von in der Mischung gelösten Gasen zur Verfügung steht, eine gewisse Rolle sowie auch das Verhältnis der Oberfläche zum Volumen, je größer dieses Verhältnis ist, umso größer ist die zum Entweichen von Gasen zur Verfügung stehende Oberfläche der Kautschukmischung.

Im Rahmen der gegenständlichen Erfindung gibt es eine Vielzahl von Möglichkeiten für den Entgasungsvorgang.

So kann beispielsweise zur Herstellung der entgasten Fertigmischung die Grundmischung (Mischung ohne Schwefel und Beschleuniger) entgast werden, was durch Kneten auf einem Walzwerk oder in einem insbesondere stempellosen Kneter, bei Temperaturen von 50 bis 180°C, insbesondere von 140 bis 160°C, erfolgen kann. Die Entgasung von Grundmischungen, die Naturkautschuk enthalten, wird vorzugsweise bei einer Temperatur von 100 bis 130 °C in einem Vakuum von 1 bis 600 Torr, insbesonders 500 bis 600 Torr, durchgeführt.

Um die erwünschten Druckverhältnisse leicht herstellen zu können, ist es günstig, wenn ein evakuierbarer Kneter eingesetzt wird.

Ein derartiger evakuierbarer stempelloser Kneter ist beispielsweise in der noch nicht veröffentlichen Deutschen Patentanmeldung 196 30 021.5 der Anmelderin beschrieben. Dieser Kneter besitzt eine Mischkammer mit ein oder zwei Rotoren, deren Wellen die Wand der Mischkammer durchsetzen. Die Durchbrechungen sind außen von luftdichten Wandungen umschlossen, die mit Anschlüssen für Einrichtungen zur Erstellung von Luftunterdruck versehen sind.

Die entgaste Grundmischung kann anschließend konventionell fertig gemischt werden.

Alternativ zur Entgasung der Grundmischung auf einem Walzwerk oder in einem geeigneten Kneter, kann die Grundmischung durch Extrudieren in einem Vakuumextruder kontinuierlich entgast und anschließend konventionell batchweise fertig gemischt werden. Dabei kann die Grundmischung im gleichen Arbeitsgang gestrainert werden, das heißt, zum Entfernen von Verunreinigungen durch ein Sieb gedrückt werden.

Wird die Fertigmischung entgast, erfolgt dies vorzugsweise durch Kneten in einem stempellosen Kneter bei einer Temperatur von 50 bis 130°C, insbesondere 80 bis 110°C und in einem Vakuum von 1 bis 800 Torr, insbesondere von 300 bis 500 Torr. Auch hier kann zum Kneten der Mischung der in der noch nicht veröffentlichten Deutschen Patentanmeldung 196 30 021.5 beschriebenen Kneter eingesetzt werden.

Dieser Kneter kann auch dann verwendet werden, wenn die Grundmischung fertig gemischt und dabei gleichzeitig entgast wird. Dieser Vorgang erfolgt dabei bei Temperaturen von 50 bis 130°C, insbesondere 80 bis 110°C, und ebenfalls in einem Vakuum von 1 bis 800 Torr, insbesondere von 200 bis 500 Torr.

Bei einer weiteren Ausführungsvariante des erfindungsgemäßen Verfahrens erfolgen das Grundmischen, das Fertigmischen und das Entgasen in einem Arbeitsgang. Dazu kann eine Tandem - Mischanlage, wie sie aus dem Deutschen Patent 37 02 833 bekannt ist, verwendet werden. Diese Mischanlage umfaßt einen Stempelkneter und einen vorzugsweise darunter angeordneten, größeren stempellosen Kneter und eine konventionelle Aufarbeitungsanlage. Die Grundmischung wird im Oberkneter fertig gemischt und anschließend im stempellosen Kneter bei Temperaturen von 50 bis 130°C, insbesondere von 80 bis 110°C, und in einem Vakuum von 1 bis 800 Torr, insbesondere von 300 bis 600 Torr, entgast.

Bei einer weiteren erfindungsgemäßen Variante des Verfahrens kann die Fertigmischung durch kontinuierliches Extrudieren in einem Vakuumextruder bei Temperaturen unterhalb der Scorchgrenze entgast werden.

Der Entgasungsvorgang wird während einer Zeitspanne von 10 Sekunden bis 10 Minuten durchgeführt.

Der Vorteil des Einsetzens eines Kneters zum Entgasen der Grund- und/oder Fertigmischungen liegt unter anderem darin, daß ein Kneter in der Lage ist, größere Mengen an Kautschukmischung schonend zu entgasen, und daß das Entgasen gleichzeitig mit der Einarbeitung und Verteilung der reaktiven Stoffe beim Fertigmischen erfolgen kann.

Die im Entgasungskneter oder Entgasungsextruder hergestellten Mischungen bzw. Reifenaufbauteile werden zügig weiter verarbeitet. Mit einem Entgasungsextruder lassen sich insbesondere der Laufstreifen eines Reifens, einteilig oder aus Cap und Base bestehend, die Reifenseitenwände, die Wulstkeile und die Schulterkeile weitgehend entgast herstellen.

Für die Innenplatte und die Cordlagen werden die vom Fertigmischkneter kommenden Mischungen durch Kalandrieren verarbeitet.

Die Vulkanisation eines Reifens, bei dem zumindest ein Bauteil aus einer entgasten Kautschukmischung hergestellt ist, sollte möglichst unmittelbar an die Fertigstellung des Rohreifens erfolgen, da entgaste Mischungen beim Lagern wieder Gase aufnehmen können.

Neben den bereits erwähnten Vorteil der Verkürzung des für die Vulkanisationszeit ausschlaggebenden Porositätspunktes bei unverändertem Scorch bestehen weitere Vorteile der Entgasung von Kautschukmischungen beispielsweise darin, daß beim Auswerfen der heißen Grundmischung weniger Dämpfe auftreten, ebenso beim Vorgang des Spritzens und Kalandrierens, daß das Entstehen von Poren beim Spritzen weitgehend verhindert wird, was eine höhere Spritzgeschwindigkeit und eine bessere Maßhaltigkeit der gespritzten Profile bewirkt. Auch bei der Vulkanisation der Reifen entstehen weniger Dämpfe.

Neben der erzielbaren Reduktion der Vulkanisationsdauer ist auch die Qualitätsverbesserung der Reifen von Bedeutung, da beim Einsatz von entgasten Reifenbauteilen ein sehr gleichmäßiger Vulkanisationszustand des Reifens über den gesamten Reifenquerschnitt erzielbar ist. Dies ist insbesondere für den Laufstreifen, und hier für die Schulterbereiche von Bedeutung, da die Qualität des fertigen Reifens wesentlich verbessert wird, was sich vor allem in einem reduzierten Rollwiderstand äußert.

Ein Reifen mit Bauteilen aus entgasten Mischungen kann zwar früher porenfrei entformt werden, es kann jedoch vorkommen, daß der Reifen aufgrund der unveränderten Ausvulkanisationscharaktaristik nach dem Abkühlen nicht immer eine ausreichende Ausvulkanisation besitzt. Es kann daher von Vorteil sein, den Reifen nach der Entformung entweder durch einen Wärmestau oder durch Nachheizen z.B. in einem Heißluftkanal, nachzuvulkanisieren.

Zusätzlich kann die Heizzeit noch weiter verkürzt werden, indem die entgasten Kautschukmischungen schneller vulkanisierend eingestellt werden, insbesondere wenn die Kautschukmischungen einen Scorch bei 130° kleiner als 5 Minuten, vorzugsweise kleiner als 2 Minuten, besitzen. Auch diese schnell heizenden Mischungen können in einer Tandem - Mischanlage wie sie aus dem Deutschen Patent 37 02 833 bekannt ist, hergestellt und entgast werden.

Von besonderem Vorteil ist der Einsatz von entgasten Kautschukmischungen bei Reifen, die nach dem aus der Deutschen Patentanmeldung Nr. 195 07 486 bekannten Verfahren gefertigt werden.

Bei diesem bekannten Verfahren wird die Herstellung des Reifens in zwei von einander getrennten Teilverfahren bzw. Stufen durchgeführt. Im ersten Verfahrensteil wird ein Teilreifen erstellt, welcher in einer Vulkanisationsform vulkanisiert wird. Im zweiten Verfahrensteil werden die den Reifen komplettierenden Bauteile insbesondere roh (unvulkanisiert) aufgebracht und der fertig aufgebaute Reifen wird ebenfalls einem Vulkanisationsvorgang unterzogen.

Der im ersten Verfahrensteil erstellte Teilreifen wird dabei nach einem der üblichen Verfahren zur Herstellung eines Neureifens aufgebaut und zwar soweit, daß die radial äußerste Lage zumindest eine bzw. die Karkasslage und höchstens eine Laufstreifenbasislage bzw. eine Laufstreifenunterplatte ist. Dazwischen gibt es eine Anzahl von Möglichkeiten, das Herstellverfahren zu variieren, so kann beispielsweise als radial äußerste Lage eine der inneren Gürtellagen des Gürtelverbandes oder auch der komplette Gürtelverband aufgebracht werden.

Der im zweiten Verfahrensteil komplettierte Reifen wird nun nochmals vulkanisiert. Bei einem herkömmlichen Fertigstellen des Reifens im zweiten Verfahrensteil ist daher in Summe gesehen die Vulkanisationszeit länger als wenn der Reifen konventionell, d.h. in einem aufgebaut und vulkanisiert wird. Die zweite Vulkanisation erfordert, wenn im zweiten Verfahrensteil lediglich der Laufstreifen aufgebracht wird, im allgemeinen eine Zeit von 6 bis 7 Minuten.

Gerade bei diesem Herstellungsverfahren lassen sich nun die Vulkanisationsbelastung und damit auch die Vulkanisationszeit signifikant verringern, wenn die Kautschukmischungen jener Aufbauteile des Reifens, die im zweiten Verfahrensteil aufgebracht werden, vor dem Aufbringen entgast werden.

Fig. 1 zeigt eine Schrägansicht auf den Abschnitt einer Hälfte eines im ersten Verfahrensteil fertig vulkanisierten Teilreifens, teilweise aufgeschnitten. Der in dieser Zeichnungsfigur dargestellte Teilreifen 20 umfaßt als Bauteile eine Laufstreifenunterplatte 21, Schulterstreifen 22, eine Karkasslage 23, Wulstkerne 24, Apexteile 25, Seitenwände 26, Hornprofile 27, einen zweilagigen Gürtel 28, wobei zwischen den Gürtellagen je ein weiterer Gummistreifen 29 (Gürtelpuffer) angeordnet ist, und eine Abdecklage 30 (Nylonbandage) sowie eine Innenplatte 31. Der Teilreifen 20 ist nach einem der bekannten Verfahren aufgebaut und hergestellt, mit dem Unterschied, daß noch kein Laufstreifen und zusätzlich eine Laufstreifenunterplatte 21 aufgebracht ist.

Dieser Teilreifen 20 wird nach seinem Aufbau in einer die erwünschte Querschnittskontur vermittelnden Vulkanisationsform, die innen zumindest weitgehend glatt ausgeführt ist, vulkanisiert.

Wird der Teilreifen 20 nach dem erfindungsgemäßen Verfahren komplettiert, so wird die Außenfläche des fertig vulkanisierten rotierbar montierten Teilreifens 20 angerauht. Anschließend wird ein roher, nach einem der oben beschriebenen Verfahren entgaster Laufstreifen aufgebracht, auf die Seitenwände werden dünne, zirka 1 mm dicke Seitenwandabdeckstreifen, deren Mischungszusammensetzung bevorzugt jener der Seitenwände entspricht, aufgelegt und angedrückt. Die Seitenwandabdeckstreifen können ebenfalls aus einer entgasten Mischung bestehen. Der derart komplettierte Reifen wird nun in eine Vulkanisationsform, die insbesondere in einzelne Segmente geteilt ist, gelegt, und das Vulkanisieren des Laufstreifens und der Seitenwandabdeckstreifen zu bewirken. Die Vulkanisationsformteile, die das Laufstreifenprofil und die Seitenwandbeschriftung u. dgl. ausformen, sind, wie es üblich ist, mit entsprechend ausgebildeten Stegen, Lamellenblechen u.s.w. versehen. Dabei reduziert sich die Vulkanisationszeit im zweiten Verfahrensteil auf ca. 2 bis 3 Minuten. Hier ist daher auch die erzielbare Energieersparnis beträchtlich.

Es ist günstig, entgaste Mischungen relativ warm zu verarbeiten. Aus diesem Grund ist es auch von Vorteil, wenn der im ersten Verfahrensteil erstellte Teilreifen auf eine Temperatur zwischen 50 und 150 °C angewärmt wird, bevor der rohe Laufstreifen aufgebracht wird. Alternativ oder ergänzend dazu kann auch der Laufstreifen warm aufgebracht werden. In jedem Fall sollte der Reifen unmittelbar nach seiner Fertigstellung geheizt werden.

Es ist selbstverständlich, daß mit entgasten Kautschukmischungen bei diesem bekannten Verfahren auch dann vorteilhaft gearbeitet werden kann, wenn der im ersten Verfahrensteil hergestellte Teilreifen im zweiten Verfahrensteil noch durch den Gürtelverband oder durch eine Gürtellage komplettiert gehört. In diesem Fall können auch die Aufpreßmischungen der Gürtellagen, die Kautschukmischung für eine etwaige Bandagenlage etc. aus entgasten Mischungen hergestellt. Wesentlich ist jedoch auch hier, daß zumindest der Laufstreifen entgast ist.

Das erfindungsgemäße Verfahren ist auch bei der Herstellung runderneuerter Reifen vorteilhaft einsetzbar. Der abgefahrene, maschinell entfernte Laufstreifen wird dabei durch einen Laufstreifen ersetzt, der aus einer entgasten Kautschukmischung hergestellt ist. Auch hier ist es günstig, wenn die Reifenkarkasse vor dem Aufbringen des rohen Laufstreifens, wie oben erwähnt, angewärmt wird.

Der entgaste rohe Laufstreifen sollte möglichst zügig weiterverarbeitet und der vom Aufbau her komplettierte Reifen möglichst zügig dem Vulkanisationsvorgang unterzogen werden.

## Patentansprüche

1. Verfahren zur Herstellung eines Reifens, insbesondere eines Fahrzeugluftreifens, welcher aus einzelnen Reifenbauteilen - wie beispielsweise einer Innenplatte, zumindest einer Karkassenlage, Wulstkernen und Kernprofilen, Seitenwänden, einem Gürtelverband und einem Laufstreifen - aufgebaut ist, die im unvulkanisierten Zustand aus Aktivruß und/oder aktiven hellen Füllstoff enthaltenden Kautschukmischungen bestehen oder solche Kautschukmischungen enthalten, dadurch gekennzeichnet, daß die Kautschukmischung(en), gegebenenfalls bereits die ihnen zugrundeliegenden Grundmischungen, zumindest eines dieser Reifenbauteile vor der Vulkanisation letzterer einer Entgasung unterzogen wird bzw. werden, und daß der Reifen oder Teile davon in einem entgasten Zustand vulkanisiert wird bzw. werden.

2. Verfahren nach Anspruch 1, dadurch gekennzeichnet, daß zumindest einer der die Dauer der Vulkanisationszeit bestimmenden Reifenbauteile, insbesondere der Laufstreifen, zumindest ein Teil des Laufstreifens oder die Kernprofile, aus einer entgasten Kautschukmischung hergestellt wird.

3. Verfahren zur Herstellung eines Reifens, bei dem ein Laufstreifen aus einer unvulkanisierten Kautschukmischung auf eine Reifenkarkasse, deren abgefahrener Laufstreifen vorher entfernt wurde, aufgebracht wird und der Reifen anschließend vulkanisiert wird, nach Anspruch 1 oder 2, dadurch gekennzeichnet, daß der Laufstreifen aus einer entgasten Kautschukmischung hergestellt wird.

4. Verfahren zur Herstellung eines Reifens, welches in zwei voneinander getrennte Verfahrensteile geteilt ist, wobei im ersten Verfahrensteil ein Teilreifen, welcher als radial äußerste Lage wenigstens eine Karkassenlage und höchstens einen Teil des Laufstreifens aufweisend aufgebaut und anschließend vulkanisiert wird, wobei im zweiten Verfahrensteil der Teilreifen zu einem Komplettreifen aufgebaut wird, welcher ebenfalls einem Vulkanisationsvorgang unterzogen wird, nach Anspruch 1 oder 2, dadurch gekennzeichnet, daß von dem im zweiten Verfahrensteil aufgebrachten und aus Kautschukmischungen bestehenden Bauteilen zumindest der Laufstreifen oder ein Teil des Laufstreifens aus einer entgasten Kautschukmischung erstellt wird.

5. Verfahren nach einem der Ansprüche 1 bis 4, dadurch gekennzeichnet, daß der fertig aufgebaute Reifen unmittelbar nach seinem Aufbau vulkanisiert wird.

6. Verfahren nach einem der Ansprüche 1 bis 5, dadurch gekennzeichnet, daß zur Herstellung der entgasten Fertigmischung die Grundmischung entgast wird.

7. Verfahren nach Anspruch 6, dadurch gekennzeichnet, daß die Grundmischung durch Kneten auf einem Walzwerk entgast wird.

8. Verfahren nach Anspruch 6, dadurch gekennzeichnet, daß die Grundmischung durch Kneten in einem vorzugsweise stempellosen Kneter entgast wird.

9. Verfahren nach Anspruch 7 oder 8, dadurch gekennzeichnet, daß die Entgasung bei Temperaturen von 50 bis 180° C, insbesondere von 140 bis 160° C, durchgeführt wird.

10. Verfahren nach einem der Ansprüche 6, 8 oder 9, dadurch gekennzeichnet, daß die Grundmischung bei Temperaturen von 100 bis 130°C und in einem Vakuum von 1 bis 800 Torr, insbesondere von 500 bis 600 Torr, entgast wird.

11. Verfahren nach Anspruch 10, dadurch gekennzeichnet, daß der Kneter ein evakuierbarer, stempelloser Kneter ist.

12. Verfahren nach einem der Ansprüche 6 bis 11, dadurch gekennzeichnet, daß die entgaste Grundmischung konventionell fertig gemischt wird.

13. Verfahren nach Anspruch 6, dadurch gekennzeichnet, daß die Grundmischung durch Extrudieren in einem Vakuumextruder kontinuierlich entgast wird.

14. Verfahren nach Anspruch 13, dadurch gekennzeichnet, daß die Grundmischung im gleichen Arbeitsgang gestrainert wird.

15. Verfahren nach Anspruch 13 oder 14, dadurch gekennzeichnet, daß die Grundmischung konventionell batchweise fertig gemischt wird.

16. Verfahren nach einem der Ansprüche 1 bis 5, dadurch gekennzeichnet, daß die Fertigmischung durch Kneten in einem vorzugsweise stempellosen Kneter bei Temperaturen von 50 bis 130°C, insbesondere von 80 bis 110°C, in einem Vakuum von 1 bis 800 Torr, insbesondere von 300 bis 500 Torr entgast wird.

17. Verfahren nach einem der Ansprüche 1 bis 6, dadurch gekennzeichnet, daß die Grundmischung durch Kneten in einem vorzugsweise stempellosen Kneter bei Temperaturen von 50 bis 130°C, insbesondere von 80 bis 110°C, in einem Vakuum von 1 bis 800 Torr, insbesondere von 300 bis 500 Torr, fertig gemischt und dabei gleichzeitig entgast wird.

18. Verfahren nach Anspruch 16 oder 17, dadurch gekennzeichnet, daß der Kneter ein evakuierbarer stempelloser Kneter ist.

19. Verfahren nach einem der Ansprüche 1 bis 5, dadurch gekennzeichnet, daß die Grundmischung in einer Tandem - Mischanlage im Oberkneter fertig gemischt wird und anschließend im stempellosen Tandemkneter bei Temperaturen von 50 bis 130°C, insbesondere von 80 bis 110°C, in einem Vakuum von 1 bis 800 Torr, insbesondere von 300 bis 500 Torr, entgast wird.

20. Verfahren nach einem der Ansprüche 1 bis 5, dadurch gekennzeichnet, daß die Fertigmischung durch kontinuierliches Extrudieren in einem Vakuumextruder bei Temperaturen unterhalb der Scorchgrenze entgast wird.

21. Verfahren nach einem der Ansprüche 1 bis 20, dadurch gekennzeichnet, daß der Entgasungsvorgang während einer Zeitspanne von 10 Sekunden bis 10 Minuten durchgeführt wird.

22. Verfahren nach einem der Ansprüche 1 bis 21, dadurch gekennzeichnet, daß die zur Entgasung vorgesehene Kautschukmischung einen Scorch bei 130°C von weniger als 5 Minuten aufweist.

23. Verfahren nach Anspruch 22, dadurch gekennzeichnet, daß die Kautschukmischung einen Scorch bei 130°C von weniger als 2 Minuten aufweist.

24. Verfahren nach Anspruch 22 oder 23, dadurch gekennzeichnet, daß die Kautschukmischung in einer Tandem - Mischanlage hergestellt wird.

25. Verfahren nach einem der Ansprüche 1 bis 24, dadurch gekennzeichnet, daß der Reifen nach der Entnahme aus der Vulkanisationsform nachvulkanisiert wird.

26. Verfahren nach Anspruch 25, dadurch gekennzeichnet, daß der Reifen durch einen Wärmestau nachvulkanisiert wird.

27. Verfahren nach Anspruch 25, dadurch gekennzeichnet, daß der Reifen in einem Heißluftkanal nachvulkanisiert wird.

28. Verfahren nach Anspruch 3 oder 4, dadurch gekennzeichnet, daß die Reifenkarkasse vor dem Aufbringen der entgasten Reifenbauteile auf eine Temperatur zwischen 50 und 150°C, insbesondere 90 bis 130°C, erwärmt wird.

29. Verfahren nach einem der Ansprüche 1 bis 28, dadurch gekennzeichnet, daß der Reifen vulkanisiert wird, bevor der bzw. die entgasten Reifenbauteile abgekühlt ist bzw. sind.

30. Reifen, insbesondere Fahrzeugluftreifen, der nach dem Verfahren gemäß einem oder mehreren der Ansprüche 1 bis 29 hergestellt ist.
